# EUROPÄISCHE PATENTANMELDUNG

(11) **EP 2 698 311 A2**
(43) Veröffentlichungstag der Anmeldung: **19.02.2014**
(21) Anmeldenummer: 13192683.4
(22) Anmeldetag: 25.08.2011
(51) Int. Cl.: B62L 3/02, F16L 41/00, F16D 55/22

(54) **Hydraulische Scheibenbremse**

(30) Priorität: 26.08.2010 DE 102010035492; 31.08.2010 DE 102010040045
(62) Teilanmeldung aus: 11748947.6
(71) Anmelder: Gustav Magenwirth GmbH & Co. KG, 72574 Bad Urach (DE)
(72) Erfinder: Ruopp, Michael, 89180 Berghülen (DE); Eberlein, Hubert, 72574 Bad Urach (DE); Hujer, Joachim, 72582 Grabenstetten (DE); Künstle, Reiner, 72555 Metzingen (DE); Beier, Jürgen, 89081 Ulm (DE)
(74) Vertreter: Friese, Martin

(57) **Zusammenfassung**

Hydraulische Scheibenbremse für ein lenkergeführtes Fahrzeug, insbesondere ein Fahrrad und/oder Motorrad, mit einer Bremszange (110), die einen Druckraum (114), eine Hydraulikanschlussbohrung (111) und zumindest einen Hydraulikkanal (112) aufweist, der von einem Verbindungsabschnitt (113) der Hydraulikanschlussbohrung (111) zu dem zumindest einen Druckraum (114) verläuft, einer Bremsleitung (120) und einem mit der Bremsleitung (120) verbundenen Anschlussglied (130), das einen ringförmigen Kopf (131) aufweist, wobei die Hydraulikanschlussbohrung (111) in einer Richtung (152) verläuft, die einen Winkel (α) von ungefähr 5 bis 30 Grad relativ zu der Richtung (151) des zumindest einen Bremszangenzylinders (118) aufweist.

## Beschreibung

Die Erfindung betrifft eine hydraulische Scheibenbremse gemäß dem Oberbegriff von Anspruch 1.

Bei bekannten hydraulischen Scheibenbremsen ist die Hydraulikanschlussbohrung in einer Richtung parallel zu der Achse der Bremszangenzylinder ausgebildet, in denen die Bremskolben angeordnet sind und auf Bremsbeläge einwirken, um diese mit einem Bremsband einer Bremsscheibe in Eingriff zu bringen. Die Bremsleitung wird bei den bekannten hydraulischen Scheibenbremsen zum Schutz vor Beschädigungen bei Stürzen auf der Innenseite des festen Rahmenteils, an dem die Bremszange befestigt wird, angeordnet. Es besteht die Gefahr, dass die Bremsleitung mit den Speichen des Laufrads in Eingriff kommt. Um das zu vermeiden, wird bei den bekannten hydraulischen Scheibenbremsen die Bremsleitung mit einem abgewinkelten Anschlussglied an der Bremszange befestigt, um die Bremsleitung seitlich nach außen weg von dem Laufrad zu führen. Dadurch ergibt sich der Nachteil, dass die Bremsleitung nur in einem bestimmten Winkel von der Bremszange weggeführt werden kann, der durch den Winkel in dem Anschlussglied definiert ist.

Der Erfindung liegt daher die Aufgabe zugrunde, eine hydraulische Fahrradscheibenbremse anzugeben, bei der der Winkel, in dem die Bremsleitung von der Bremszange weggeführt wird, innerhalb eines gewissen Bereichs leicht einstellbar ist. Des Weiteren liegt der Erfindung auch die Aufgabe zugrunde, eine hydraulische Fahrradscheibenbremse anzugeben, bei der der Anschluss der Bremsleitung an der Bremszange einen leichten und sicheren Aufbau hat. Die erste und/oder zweite Aufgabe der vorliegenden Erfindung wird mit einer hydraulischen Scheibenbremse gemäß den Merkmalen von Anspruch 1 gelöst. Vorteilhafte Ausgestaltungen sind in den abhängigen Ansprüchen bzw. der Beschreibung und insbesondere der folgenden Beschreibung angegeben.

Gemäß einer Ausführung der Erfindung wird eine hydraulische Scheibenbremse für ein lenkergeführtes Fahrzeug, insbesondere ein Fahrrad und/oder Motorrad, mit einer Bremszange angegeben, die einen Druckraum, eine Hydraulikanschlussbohrung und zumindest einen Hydraulikkanal aufweist, der von einem Verbindungsabschnitt der Hydraulikanschlussbohrung zu dem zumindest einen Druckraum verläuft, einer Bremsleitung und einem mit der Bremsleitung verbundenem Anschlussglied, das einen ringförmigen Kopf aufweist, wobei die Hydraulikanschlussbohrung in einer Richtung verläuft, die einen Winkel von ungefähr 5 bis 30 Grad relativ zu der Richtung des zumindest einen Bremszangenzylinders aufweist, und/oder wobei sich das Anschlussglied in einer Richtung erstreckt, die einen Winkel von ungefähr 5 bis 30 Grad relativ zu einer Richtung aufweist, die senkrecht zu der Richtung der Achse des zumindest einen Bremszangenzylinders ist.

Diese Ausführung der Erfindung hat den Vorteil, dass eine Änderung des Winkels durch Drehen des Anschlussglieds um die Achse der Hydraulikanschlussbohrung erfolgen kann, damit die Bremsleitung von der Bremszange in einem gewünschten Winkel weggeführt werden kann.

Erfindungsgemäß kann der Winkel zwischen der Richtung der Hydraulikanschlussbohrung und der Richtung des zumindest einen Bremszangenzylinders ungefähr 5 bis 20 Grad und vorzugsweise ungefähr 10 Grad betragen, und/oder kann der Winkel zwischen der Richtung, in der sich das Anschlussglied erstreckt, und der Richtung, die senkrecht zu der Richtung der Achse des zumindest einen Bremszangenzylinders ist, ungefähr 5 bis 20 Grad und vorzugsweise ungefähr 10 Grad betragen. Erfindungsgemäß kann die hydraulische Bremse ein Verbindungsglied aufweisen, das vorzugsweise gemäß den oben genannten Merkmalen ausgebildet ist. Erfindungsgemäß kann das Verbindungsglied in der Hydraulikanschlussbohrung aufgenommen sein. Erfindungsgemäß kann der ringförmige Kopf des Anschlussglieds das Verbindungsglied derart umschließen, dass das Anschlussglied um die Achse des Verbindungsglieds bzw. der Hydraulikanschlussbohrung drehbar gelagert ist.

Erfindungsgemäß kann das Anschlussglied gerade ausgebildet sein. Infolge der winkeligen Anordnung der Hydraulikanschlussbohrung ergibt sich der Vorteil, dass sich der Winkel, in dem die Hydraulikleitung sich von der Bremszange weg erstreckt, durch Drehen der Hydraulikleitung um das Verbindungsglied verändert werden kann.

Hydraulische Fahrradscheibenbremsen mit einer Bremszange, einer Bremsleitung, einem mit der Bremsleitung verbundenen Anschlussglied, das einen ringförmigen Kopf aufweist, und einem Verbindungsglied zur Verbindung des Anschlussglieds mit der Bremszange sind bekannt. Das Verbindungsglied zur Verbindung des Anschlussglieds mit der Bremszange ist bei den bekannten hydraulischen Fahrradscheibenbremsen eine Hohlschraube, die durch den ringförmigen Kopf des Anschlussglieds ragt und die Bremsleitung über das hohle Innere der Hohlschraube mit Hydraulikkanälen verbindet, die zu den Druckräumen der Bremszange führen. Die Hohlschrauben haben die Doppelfunktion, das Anschlussglied seitlich an der Bremszange zu befestigen und eine hydraulische Verbindung herzustellen.

Diese bekannten hydraulischen Scheibenbremsen haben den Nachteil, dass die Hohlschraube relativ groß bemessen werden muss, um eine sichere und hinreichend stabile Verbindung zwischen dem Anschlussglied und der Bremszange zu gewährleisten. Dadurch ergibt sich ein relativ großes Gewicht.

Der Erfindung liegt daher auch die Aufgabe zugrunde, eine hydraulische Scheibenbremse anzugeben, die bei einem geringen Gewicht eine sichere und zuverlässige Funktion gewährleistet.

Diese Aufgabe der Erfindung wird mit einer hydraulischen Scheibenbremse bzw. eine Bremszange gemäß den Merkmalen von Anspruch 9 gelöst. Vorteilhafte Ausgestaltungen der Erfindung sind in den abhängigen Ansprüchen bzw. der Beschreibung und insbesondere der folgenden Beschreibung angegeben.

Gemäß einer Ausführung der Erfindung wird eine hydraulische Scheibenbremse für ein lenkergeführtes Fahrzeug angegeben, insbesondere für ein Fahrrad und/oder ein Motorrad, die eine Bremszange mit einem Druckraum, einer Hydraulikanschlussbohrung und zumindest einem Hydraulikkanal, der von einem Verbindungsabschnitt der Hydraulikanschlussbohrung zu dem zumindest einen Druckraum verläuft, eine Bremsleitung, ein mit der Bremsleitung verbundenes Anschlussglied, das einen ringförmigen Kopf aufweist, und ein in der Hydraulikanschlussbohrung angeordnetes Verbindungsglied aufweist, wobei das Verbindungsglied einen Verbindungsbereich aufweist, der in dem Kopf zur hydraulischen Verbindung der Bremsleitung mit dem Verbindungsglied angeordnet ist, wobei das Verbindungsglied eine Außenverzahnung und/oder an seinem Außenbereich zumindest eine Nut und/oder Abflachung aufweist, die den Verbindungsbereich mit dem Verbindungsabschnitt hydraulisch verbindet.

Diese Ausführung der Erfindung hat den Vorteil, dass die Verbindung zwischen Anschlussglied und Bremszange bei gleicher Dimensionierung des Verbindungsglieds stabiler ist bzw. ein Verbindungsglied mit geringeren Abmessungen eingesetzt werden kann, wodurch sich bei gleicher Stabilität ein geringeres Gewicht der hydraulischen Scheibenbremse ergibt.

Erfindungsgemäß können zwischen dem ringförmigen Kopf des Anschlussglieds und dem Verbindungsbereich des Verbindungsglieds Dichtungselemente vorgesehen sein, die in axialer Richtung des Verbindungsglieds und gegebenenfalls in radialer Richtung des Verbindungsglieds abdichten.

Bekannte Bremszangen von hydraulischen Scheibenbremsen weisen einen Scheibenraum und eine Bremsbelagaufnahme auf, die oberhalb des Scheibenraums angeordnet sind. Die bekannten Bremszangen weisen zwei Seitenabschnitte auf, die den Scheibenraum seitlich begrenzen. Sie weist ferner einen Hydraulikanschlussbereich auf, der die beiden Seitenbereiche mit einander verbindet. Derartige Bremszangen hydraulischer Scheibenbremsen haben den Nachteil, dass die Bremszangen relativ groß und schwer ausgebildet sein müssen, um eine hinreichende Steifigkeit zu erreichen.

Der Erfindung liegt daher auch die Aufgabe zugrunde, eine hydraulische Scheibenbremse mit einer Bremszange anzugeben, die bei einer hohen Stabilität und Steifigkeit relativ leicht ausgebildet ist.

Diese Aufgabe der Erfindung wird mit einer hydraulischen Scheibenbremse bzw. einer Bremszange gemäß Anspruch 12 gelöst. Vorteilhafte Ausgestaltungen der Erfindung sind in den abhängigen Ansprüchen bzw. der Beschreibung und insbesondere der folgenden Beschreibung angegeben.

Gemäß der Erfindung wird auch eine hydraulische Scheibenbremse mit einer Bremszange angegeben, die einen Scheibenraum und eine Bremsbelagaufnahme aufweist, die oberhalb des Scheibenraums angeordnet ist, wobei die Bremszange zwei Seitenabschnitte aufweist, die den Scheibenraum seitlich begrenzen, und einen Hydraulikanschlussbereich aufweist, der die beiden Seitenbereiche mit einander verbindet, wobei die Bremszange einen Verbindungsabschnitt zur Verbindung der beiden Seitenabschnitte aufweist, wobei die Bremsbelagaufnahme zwischen dem Hydraulikanschlussabschnitt und dem Verbindungsabschnitt angeordnet ist.

Erfindungsgemäß kann der Verbindungsabschnitt bezogen auf den Zylinderraum außermittig angeordnet sein.

Erfindungsgemäß kann der Verbindungsabschnitt mit dem Hydraulikanschlussabschnitt einen Winkel von weniger als 120°, vorzugsweise von weniger als 100°, weiter vorzugsweise von weniger als 90°, weiter vorzugsweise von weniger als 80° und bevorzugt von ungefähr 70° einschließen.

Erfindungsgemäß können der Hydraulikanschlussabschnitt und der Verbindungsabschnitt einen Winkel von mehr als 50°, vorzugsweise von mehr als 60° und bevorzugt von ungefähr 70° einschließen.

Erfindungsgemäß können der Hydraulikanschlussabschnitt und/oder der Verbindungsabschnitt im Wesentlichen entlang einer Tangente des Zylinderraums und/oder im Wesentlichen entlang einer Tangente des Bremszangengehäuses im Bereich des Zylinderraums angeordnet sein.

Erfindungsgemäß kann der Hydraulikanschluss an die erfindungsgemäße Bremszange auch an einer anderen Stelle außerhalb des in den Ausführungsbeispielen gezeigten Hydraulikanschlussbereiches angeordnet sein. Entscheidend ist, dass die Bremszange zwei Versteifungsbereiche bzw. Bügel aufweist, die die beiden den Scheibenlauf begrenzenden Seiten der Bremszange mit einander verbinden. Vorteilhafterweise können die Bügel entsprechend den Versteifungsbügeln von Federgabeln angeordnet sein.

Gemäß der Erfindung wird somit auch eine Bremszange angegeben, die zwei einen Scheibenraum begrenzende Seitenwandabschnitte aufweist, wobei in zumindest einem Seitenwandabschnitt ein einen Kolben aufnehmender Zylinderraum ausgebildet ist, wobei die beiden Seitenwandabschnitte miteinander verbunden sind, wobei die Bremszange einen ersten und einen zweiten Versteifungsbereich und/oder ersten und zweiten Bügel und/oder ersten und zweiten Bogenabschnitt aufweist, die die Seitenwandabschnitte der Bremszange miteinander verbinden.

Erfindungsgemäß können die Versteifungsbereiche bzw. Bögen bzw. Bügel derart angeordnet sein, dass sie in Ebenen verlaufen, die in einem Winkel von ungefähr 120 bis 30° zu einander verlaufen, vorzugsweise in einem Winkel zwischen 100 und 40°, weiter vorzugsweise in einem Winkel von 80 bis 50° und bevorzugt an einem Winkel von ungefähr 60° zu einander verlaufen.

Erfindungsgemäß können die Verstärkungsbereiche und/oder Bügel und/oder Bögen auf Ebenen angeordnet sein, die außerhalb der Mittelachse der Kolbenbohrung des Zylinders verlaufen. Vorzugsweise verlaufen die Ebenen, auf denen die Verstärkungsbereiche, Bügel und/oder Bögen angeordnet sind, im Wesentlichen ungefähr tangential zu der Kolbenbohrung des Zylinders der Bremszange.

Erfindungsgemäß können die Verbindungsbereiche und/oder Bögen und/oder Bügel in einem Winkel von ungefähr 15 bis 60°, vorzugsweise in einem Winkel von 20 bis 50°, weiter vorzugsweise in einem Winkel von 25 bis 40° und bevorzugt in einem Winkel von ungefähr 30° zu der Winkelhalbierenden der Ebenen, in denen die Versteifungsbereiche und/oder Bügel und/oder Bögen liegen, verlaufen. Vorzugsweise können die beiden Winkel ungefähr gleich groß sein.

Erfindungsgemäß können die Versteifungsbereiche, Bügel und/oder Bögen, eine größere Höhe als Breite aufweisen.

Die Höhe der Verstärkungsbereiche und/oder Bügel und/oder Bögen ist die Abmessung der Verstärkungsbereiche und/oder Bügel und/oder Bögen in einer bezogen auf die Bremsscheibe radial nach außen verlaufenden Richtung. Die Stärke bzw. Breite der Verstärkungsbereiche und/oder Versteifungsbereiche und/oder Bügel und/oder Bögen ist im Zusammenhang mit der vorliegenden Anmeldung als die Abmessung der Verstärkungsbereiche und/oder Versteifungsbereiche und/oder Bügel und/oder Bögen in Umfangsrichtung der Bremsscheibe zu verstehen.

Erfindungsgemäß können die Verstärkungsbereiche und/oder Versteifungsbereiche und/oder Bügel und/oder Bögen eine Abmessung in der Höhe aufweisen, die ungefähr das mindestens 1,2-fache, vorzugsweise das mindestens 1,5-fache, weiter vorzugsweise das ungefähr 1,75-fache und bevorzugst das Doppelte der Stärke der Verbindungsbereiche und/oder Versteifungsbereiche und/oder Bügel und/oder Bögen aufweist.

Erfindungsgemäß kann die Höhe der Verstärkungsbereiche und/oder Versteifungsbereiche und/oder Bügel und/oder Bögen mindestens das 5-fache, vorzugsweise höchstens das 4-fache, weiter vorzugsweise höchstens das 3-fache und bevorzugt ungefähr das Doppelte der Stärke der Verbindungsbereiche und/oder Versteifungsbereiche und/oder Bügel und/oder Bögen betragen.

Der Erfindung liegt auch die Aufgabe zu Grunde, eine hydraulische Scheibenbremse anzugeben, bei der Bremsbeläge bei einem kostengünstigen Aufbau schnell und leicht montierbar bzw. auswechselbar sind.

Gemäß einer Ausführung der Erfindung wird eine hydraulische Scheibenbremse mit einer Bremszange angegeben, die einen Scheibenraum und eine Bremsbelagaufnahme aufweist, die oberhalb des Scheibenraums angeordnet ist, wobei die Bremsbelagaufnahme einen Abstand zu der Mittelebene des Scheibenraums aufweist, der größer oder gleich der Hälfte der Dicke eines Bremsbelags ist.

Die erfindungsgemäße Ausgestaltung hat den Vorteil, dass der Bremsbelag von unten in den Schacht der Bremszange eingeführt und seitlich auf die Bremsbelagaufnahme geschoben werden kann, wo er dann vorteilhaft durch die Bremsscheibe gesichert wird. Erfindungsgemäß können die beiden Bremsbeläge in entgegengesetzte Richtungen geschoben werden.

Erfindungsgemäß kann die Bremszange einen Schacht zur Aufnahme des Bremsbelags aufweisen, wobei die Bremsbelagaufnahme an in Umfangsrichtung des Scheibenraums (bezogen auf die Laufrichtung des Laufrads bzw. der Bremsscheibe) gegenüberliegenden Seiten des Schachtes ausgebildet sein kann.

Erfindungsgemäß kann die Bremszange einen Schacht zur Aufnahme des Bremsbelags aufweisen, wobei die Bremsbelagaufnahme in Umfangsrichtung des Scheibenraums (bezogen auf die Laufrichtung des Laufrads bzw. der Bremsscheibe) mittig zu dem Schacht ausgebildet sein kann.

Erfindungsgemäß kann die Bremsbelagaufnahme Führungen aufweisen, die in entsprechende Aufnahmen der Bremsbeläge eingreifen und von diesen teilweise umschlossen werden können. Diese Ausbildung der Erfindung hat den Vorteil, dass die Bremsbeläge quasi wie Kleiderbügel auf die Stange oder Vorhänge in eine Vorhangschiene gehängt werden können, ohne dass ein Bolzen entfernt und durch eine geschlossene Aufnahme der Bremsbeläge geschoben werden muss, wie es im Stand der Technik bekannt ist.
- Fig. 1: zeigt eine Schnittansicht einer Bremszange mit einer Bremsleitung einer hydraulischen Scheibenbremse gemäß der Erfindung.
- Fig. 2: zeigt eine Detailansicht der hydraulischen Scheibenbremse von Fig. 1, wobei nur das Verbindungsglied und das Anschlussglied mit der Bremsleitung dargestellt sind.
- Fig. 3: zeigt eine perspektivische teilweise freigeschnittene Teilansicht der Bremszange von Fig. 1 mit weiteren Details des Verbindungsglieds von Fig. 1.
- Fig. 4: zeigt eine Außenansicht der Bremszange und Bremsleitung von Fig. 1.
- Fig. 5: zeigt eine Seitenansicht der Bremszange und Bremsleitung der hydraulischen Scheibenbremse von Fig. 1.
- Fig. 6: zeigt eine der Fig. 1 entsprechende Schnittansicht einer Scheibenbremse gemäß einer weiteren Ausführung der Erfindung.
- Fig. 7: zeigt eine Seitenansicht der Bremszange von Fig. 1 als Strichzeichnung.
- Fig. 8: zeigt eine perspektivische Schnittansicht der Bremszange von Fig. 7, wobei der Schnitt durch den Scheibenraum verläuft.
- Fig. 9: zeigt eine Schnittansicht der Bremszange von Fig. 7, wobei die Schnittebene in der Mitte des Scheibenraums liegt.
- Fig. 10: zeigt eine Seitenansicht der Bremszange von Figur 7 von der bezogen auf Figur 7 gegenüberliegenden Richtung.
- Fig. 11: zeigt eine der Figur 9 entsprechende Zeichnung, bei der Hilfslinien zur Veranschaulichung der Geometrie der die Bremszange versteifenden Komponenten.
- Fig. 12: zeigt eine Seitenansicht eines Bremsbelags gemäß einer Ausführung der Erfindung.
- Fig. 13: zeigt eine Schnittansicht einer Bremszange in der Ebene der Bremsscheibe gemäß einer Ausführung der Erfindung mit einem Bremsbelag gemäß Fig. 12.
- Fig. 14: zeigt eine perspektivische Teilansicht der Bremszange von Fig. 13, die die Befestigung der Bremsbeläge von Fig. 12 an der Bremszange von Fig. 13 zeigt.
- Fig. 15: zeigt eine Aufsicht der Bremszange von Fig. 13 ohne Bremsbeläge in Richtung der Nabe (bei montierter Bremszange).
- Fig. 16: zeigt eine Aufsicht der Bremszange von Fig. 13 ohne Bremsbeläge in einer Richtung, die zu der von Fig. 15 entgegengesetzt ist.
- Fig. 17: zeigt eine Seitenansicht der Bremszange von Fig. 13 mit eingesetzten Bremsbelägen gemäß Fig. 12.
- Fig. 18: zeigt eine Ansicht der Bremszange von Fig. 13 ohne Bremsbeläge in einer Richtung von unten (bezogen auf Fig. 17).
- Fig. 19: zeigt eine Ansicht der Bremszange von Fig. 13 ohne Bremsbeläge in einer Richtung von oben (bezogen auf Fig. 17).
- Fig. 20: zeigt eine Seitenansicht eines Bremsbelags gemäß einer weiteren Ausführung der Erfindung.
- Fig. 21: zeigt eine Schnittansicht einer Bremszange in der Ebene der Bremsscheibe gemäß einer weiteren Ausführung der Erfindung mit einem Bremsbelag gemäß Fig. 20.
- Fig. 22: zeigt eine perspektivische Teilansicht der Bremszange von Fig. 21, die die Befestigung der Bremsbeläge von Fig. 20 an der Bremszange von Fig. 21 zeigt.
- Fig. 23: zeigt eine Aufsicht der Bremszange von Fig. 21 mit eingesetzten Bremsbelägen gemäß Fig. 20 in Richtung der Nabe (bei montierter Bremszange).
- Fig. 24: zeigt eine Aufsicht der Bremszange von Fig. 21 mit eingesetzten Bremsbelägen gemäß Fig. 19 in einer Richtung, die zu der von Fig. 23 entgegengesetzt ist.
- Fig. 25: zeigt eine Seitenansicht der Bremszange von Fig. 21 mit eingesetzten Bremsbelägen gemäß Fig. 20.
- Fig. 26: zeigt eine Ansicht der Bremszange von Fig. 21 mit eingesetzten Bremsbelägen gemäß Fig. 20 in einer Richtung von unten (bezogen auf Fig. 25).
- Fig. 27: zeigt eine Ansicht der Bremszange von Fig. 21 mit eingesetzten Bremsbelägen gemäß Fig. 20 in einer Richtung von oben (bezogen auf Fig. 25).

In der Beschreibung der Ausführungsbeispiele werden folgende Bezugszeichen verwendet:
- 110: Bremszange
- 111: Hydraulikanschlussbohrung
- 112: Hydraulikkanal
- 113: Verbindungsabschnitt
- 114: Druckraum
- 115: Innengewindeabschnitt
- 116: Verschluss
- 117: Anschlussabschnitt
- 118: Bremszangenzylinder
- 119: Kolben
- 1191: Bremsbelag
- 120: Bremsleitung
- 130: Anschlussglied
- 131: ringförmiger Kopf
- 132: Verbindungskanal
- 133: Hülse
- 134: Dichtung (z.B. O-Ring)
- 135: Dichtung (z.B. O-Ring)
- 140: Verbindungsglied
- 141: Verbindungsbereich
- 142: Außenverzahnung
- 143: Verbindungsabschnitt
- 145: Außengewindeabschnitt
- 146: umlaufende Nut
- 147: Werkzeugeingriffabschnitt
- 151: Richtung der Achse des Bremszangenzylinders 118
- 152: Richtung der Hydraulikanschlussbohrung 111
- 153: Richtung senkrecht zu Richtung 151 der Achse des Bremszangenzylinders 118
- 154: Richtung des Anschlussglieds 130
- 181: Versteifungsglied (beispielsweise Bügel)
- 182: Versteifungsglied (beispielsweise Bügel ohne Hydraulikanschluss)
- 191: Richtung des Versteifungsglieds 181 in der Ebene des Scheibenraumes
- 192: Richtung des Versteifungsglieds 182 in der Ebene des Scheibenraumes
- 193: Mitte des den Kolben aufnehmenden Zylinderraums
- 810: Bremszange
- 811: Bremszylinder
- 812: Bremsbelaganlagefläche
- 813: Bremsbelagaufnahme (Schiene)
- 814: Versteifungsglied
- 815: Versteifungsglied
- 816: Hydraulikkanal
- 817: Anschlussabschnitt
- 820: Bremsbelag
- 821: Fortsatz
- 822: Fortsatz
- 823: Aussparung
- 824: Anlagefläche
- 825: Aussparung
- 826: Reibbelag
- 910: Bremszange
- 911: Bremszylinder
- 912: Bremsbelaganlagefläche
- 913: Bremsbelagaufnahme (Schiene)
- 9131: Verbindungssteg
- 914: Versteifungsglied
- 915: Versteifungsglied
- 916: Hydraulikkanal
- 917: Anschlussabschnitt
- 920: Bremsbelag
- 921: Fortsatz
- 922: Fortsatz
- 923: Aussparung
- 924: Anlagefläche
- 926: Reibbelag
- 930: Federeinrichtung

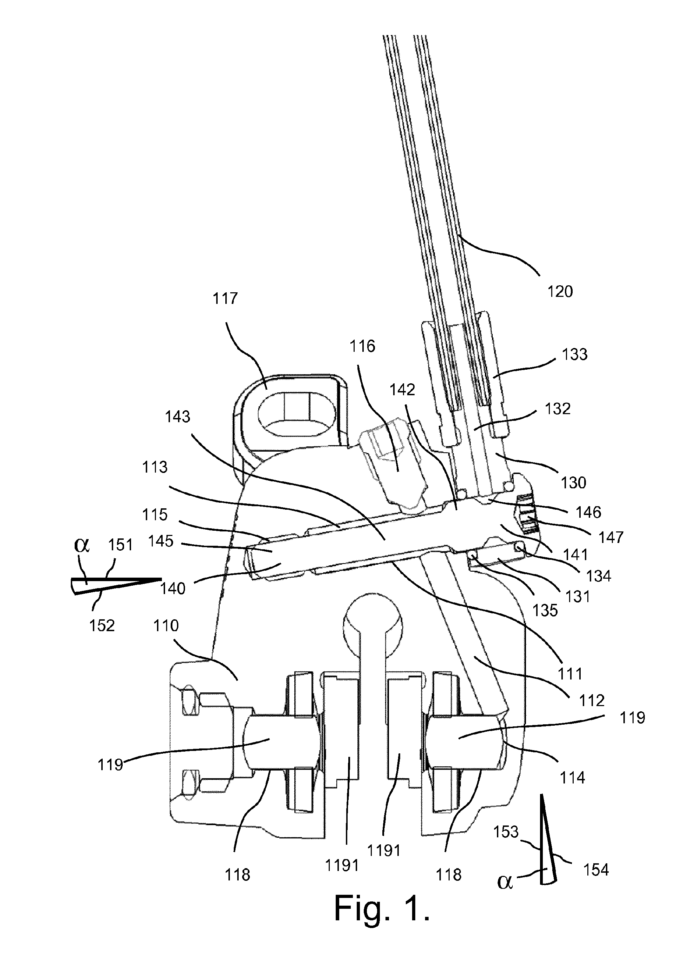

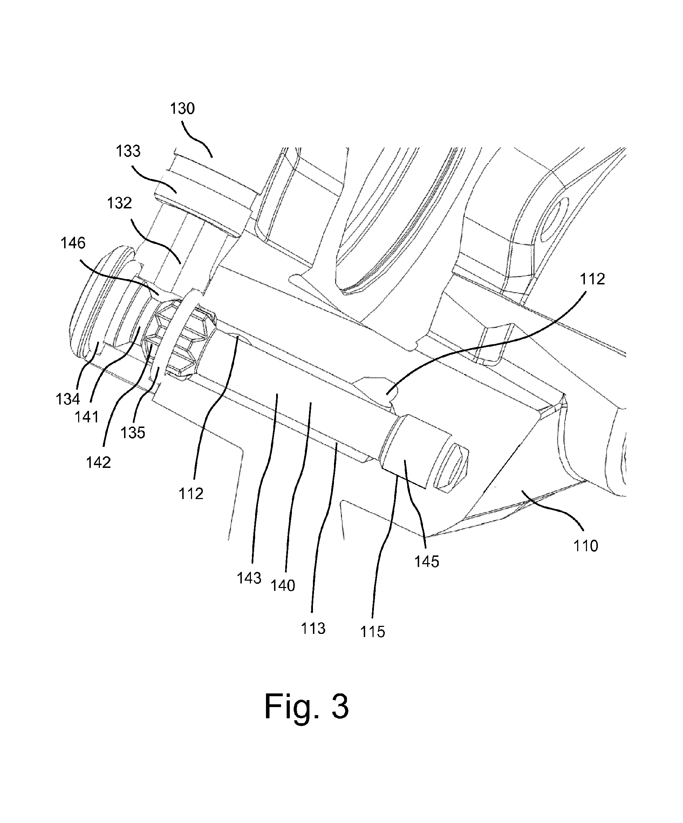

Die Figuren 1 bis 5 zeigen eine Bremszange einer hydraulischen Scheibenbremse gemäß der vorliegenden Erfindung.

Die hydraulische Scheibenbremse weist eine Bremszange 110 auf, in der eine Hydraulikanschlussbohrung 111 vorgesehen ist. Die Hydraulikanschlussbohrung 111 verläuft in einem Winkel von ungefähr 10° Neigung gegenüber der Achse der Zylinderbohrungen der Bremszangenzylinder. Die Achse der Zylinderbohrungen entspricht im Wesentlichen der Radachse. In den Zylinderbohrungen sind Kolben 119 angeordnet, die Bremsbeläge 1191 gegen eine nicht dargestellte Bremsscheibe zur Verzögerung des nicht dargestellten Rads in Angriff bringen.

Von der Hydraulikanschlussbohrung 111 verläuft ein Hydraulikkanal 112 zu einem Druckraum 114. Bei der dargestellten Ausführung weist die Bremszange zwei Druckräume 114 auf, die jeweils mit einem Hydraulikkanal 112 verbunden sind, der mit dem Verbindungsabschnitt 113 der Hydraulikanschlussbohrung 111 verbunden ist. In der in Fig. 1 gezeigten Schnittebene ist nur ein Hydraulikkanal 112 eingezeichnet. Der andere Hydraulikkanal 112 kann in einer anderen Schnittebene verlaufen bzw. ist der Übersicht halber nicht dargestellt. Die Hydraulikanschlussbohrung 111 weist an ihrem Ende einen Gewindeabschnitt 115 auf, in die das Verbindungsglied 140 mit einem Außengewindeabschnitt 145 eingeschraubt ist.

In eine nicht näher bezeichnete Befüllöffnung ist ein Verschluss 116 angeordnet. Die Bremszange 110 kann mit ihren Anschlussabschnitten 117 auf eine dem Fachmann bekannte Weise an einem feststehenden Rahmenteil des Zweirads bzw. Fahrrads oder Motorrads befestigt werden.

Die hydraulische Scheibenbremse weist eine Bremsleitung 120 auf, an der ein Anschlussglied 130 angeordnet ist. Das Anschlussglied 130 weist einen ringförmigen Kopf 131 auf. Das Anschlussglied weist einen innen liegenden Verbindungskanal 132 auf. Die Leitung 120 ist mit einer Hülse 133 auf das Anschlussglied 133 auf dem Fachmann bekannte Weise gepresst. In dem ringförmigen Kopf 131 sind Dichtungen 134 und 135 vorgesehen, die bei der dargestellten Ausführung O-Ring-Dichtungen sind.

In dem ringförmigen Kopf 131 des Anschlussglieds 130 ist ein Verbindungsglied 40 angeordnet. Das Verbindungsglied 140 weist einen Verbindungsbereich 141 auf, in den der Verbindungskanal 132 mündet. In den Verbindungsbereich 141 weist das Verbindungsglied 140 eine umlaufenden Nut 146 auf. Der Verbindungsbereich 141 ist mit den Dichtungen 132 und 133 gegenüber dem Anschlussglied 130 abgedichtet. Das Verbindungsglied 140 weist einen Verbindungsabschnitt 143 auf, der einen kleineren Außendurchmesser als der Verbindungsabschnitt 113 der Hydraulikanschlussbohrung 111 aufweist. Das Verbindungsglied 140 weist ferner einen Gewindeabschnitt 145 mit einem Außengewinde auf, der in den Gewindeabschnitt 115 der Anschlussbohrung 111 eingedreht ist. Zur hydraulischen Verbindung des Verbindungsbereichs 141 mit dem Verbindungsabschnitt 113 der Anschlussbohrung 110 weist das Verbindungsglied eine Außenverzahnung 142 auf. Um eine hydraulische Abdichtung zu erreichen, dichtet die Dichtung 135 zwischen dem Anschlussglied 130 und dem Bremszangengehäuse in axialer Richtung des Verbindungsglieds 140 ab. In Folge dieser Abdichtung ist es nicht notwendig, dass eine Dichtung zwischen dem Anschlussglied 130 und dem Verbindungsglied 140 erfolgt. Das ist wegen der Außenverzahnung 142 in diesem Abschnitt auch nicht möglich. Die Dichtung 132 kann derart ausgebildet sein, dass eine Abdichtung in radialer Richtung und/oder axialer Richtung des Verbindungsglieds 140 erfolgt. Um eine gute Abdichtung zu erreichen, ist eine Abdichtung in axialer Richtung des Verbindungsglieds 140 wünschenswert.

Das Verbindungsglied 140 weist ferner einen Werkzeugeingriffabschnitt 147 auf, der auf bekannte Weise ausgebildet ist.

Die erfindungsgemäße Ausführung hat den Vorteil, dass das Verbindungsglied 140 keinen innen laufenden Kanal wie eine Hohlschraube aufweist. Daher kann das Verbindungsglied kleiner ausgeführt werden bzw. eine höhere Stabilität aufweisen.

Gemäß einer alternativen Ausführung kann das Verbindungsglied 140 zumindest eine Nut aufweisen, die den Verbindungsbereich 141 mit dem Verbindungsabschnitt 113 hydraulisch verbindet. Diese Nut kann zusätzlich oder alternativ zu der Außenverzahnung 142 vorgesehen sein.

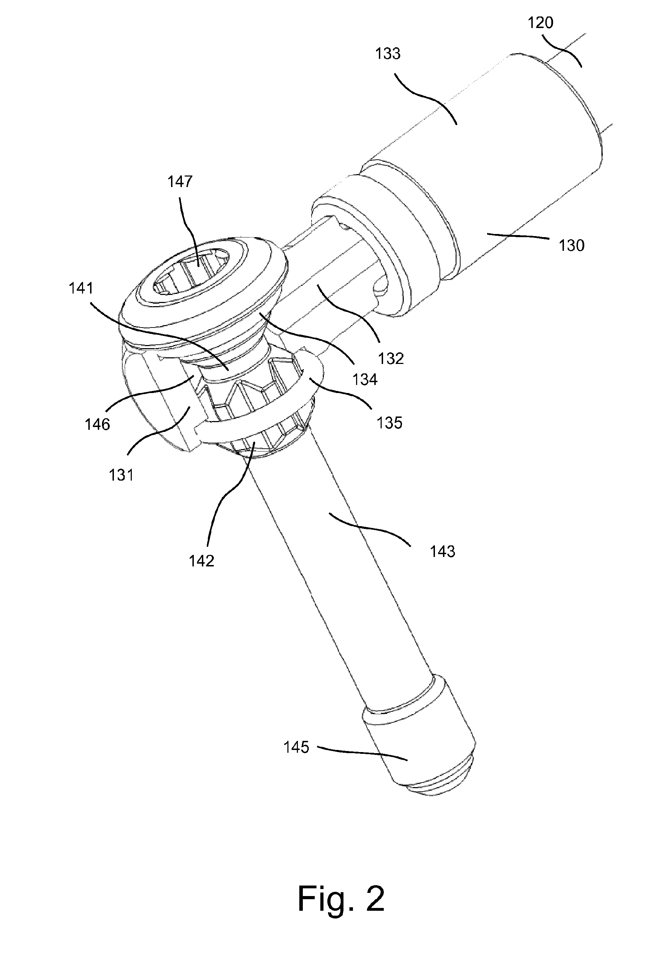

Figur 2 zeigt eine Detailansicht, bei der nur das Anschlussglied 130 und das Verbindungsglied 140 dargestellt ist. Figur 2 zeigt die hydraulische Verbindung zwischen dem Anschlussglied 130 und dem Verbindungsglied 140 und die zugehörige Abdichtung. Die Hydraulikleitung ist schematisch am oberen Rand dargestellt. Die Hydraulikleitung 120 ist über den Hydraulikkanal 132 mit dem Verbindungsbereich 141 hydraulisch verbunden, der über die Außenverzahnung 142 mit dem Verbindungsabschnitt 143 verbunden ist. Die Abdichtung erfolgt über die Dichtung 133 und 134, die sowohl in radialer als auch axialer Richtung des Verbindungsglieds 140 abdichten.

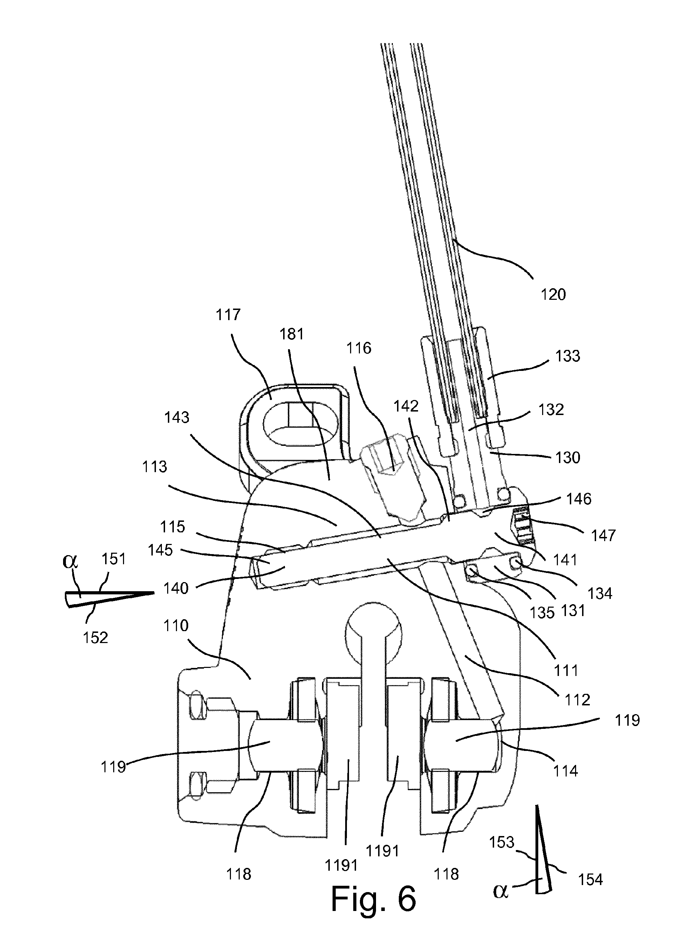

Figur 6 zeigt eine alternative Ausführung einer Scheibenbremse gemäß der Erfindung. Die gleichen Bauteile werden mit den gleichen Bezugszeichen wie bei dem in den Figuren 1 bis 5 gezeigten Ausführungsbeispiel beschrieben. Im Folgenden wird auf die Beschreibung der Ausführung gemäß den Figuren 1 bis 5 verwiesen und es werden nur die Unterschiede zwischen der Ausführung von Figur 6 und der Ausführung gemäß den Figuren 1 bis 5 beschrieben.

Die Ausführung gemäß Figur 6 unterscheidet sich von den Ausführung in den Figuren 1 bis 5 dadurch, dass in dem ringförmigen Kopf 131 des Anschlussglieds 130 Nuten vorgesehen sind, in denen die Dichtungen 134 bzw. 135 angeordnet sind. Wegen der Anordnung der Dichtungen 134 und 135 in jeweils einer Nut ergibt sich nur eine Abdichtung in axialer Richtung des Verbindungsglieds 140, d.h. dass die Dichtung 134 zwischen dem ringförmigen Kopf 131 des Anschlussglieds 130 und dem Kopf des Verbindungsglieds 140 abdichtet, und dass die Dichtung 135 zwischen dem ringförmigen Kopf 131 des Anschlussglieds 130 und dem Gehäuse der Bremszange 110 abdichtet.

Die Hydraulikanschlussbohrung 111 verläuft in der Bremszange entlang einer Richtung 152, die gegenüber der Richtung 151 der Achse des Bremszangenzylinders 118 einen Winkel α aufweist. Das Verbindungsglied 140 ist in der Hydraulikanschlussbohrung 111 angeordnet und ebenfalls um den Winkel α gegenüber der Richtung 151 der Achse des Bremszangenzylinders 118 geneigt. In dem Verbindungsbereich 141 weist das Verbindungsglied 140 eine vorzugsweise umlaufende Nut bzw. Vertiefung auf, die mit dem Hydraulikkanal 132 in dem Anschlussglied 130 in hydraulischer Verbindung steht. Bei der dargestellten Ausführung der Erfindung weist das Verbindungsglied 140 eine Außenverzahnung 142 auf, die zwischen dem Verbindungsbereich 141 und dem Hydraulikübertragungsbereich 143 angeordnet ist. Alternativ und/oder zusätzlich kann das Verbindungsglied 140 eine Abflachung aufweisen, die in dem Bereich vorgesehen ist, in dem bei dem in den Figuren 1 bis 5 gezeigten Ausführungsbeispiel die Außenverzahnung vorgesehen ist.

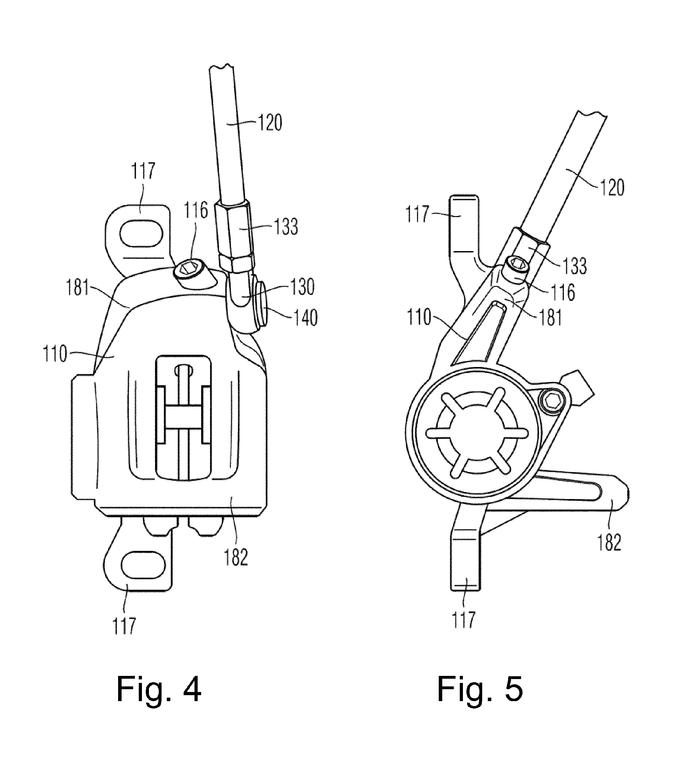

Das Anschlussglied 130 ist gerade ausgebildet, das heißt, dass der ringförmige Kopf 131 ohne Winkel in den Bereich übergeht, an dem die Leitung 120 mit der Hülse 133 befestigt ist. Das Anschlussglied 130 ist mit einem ringförmigen Kopf 131 an dem Verbindungsbereich 141 des Verbindungsglieds angeordnet, und zwar um die Achse des Verbindungsglieds 140 drehbar, die entlang der Richtung 152 verläuft. In Folge der schrägen Anordnung der Hydraulikanschlussbohrung 111 ist das Anschlussglied 130 ebenfalls um den Winkel α geneigt, der in den Figuren 1 und 5 als Winkel zwischen der Richtung 154, in der sich das Anschussglied 130 erstreckt, und der Richtung 153, die senkrecht zu der Richtung 151 der Achse des Bremszangenzylinders 118 verläuft, eingezeichnet ist.

Der Winkel α beträgt bei den in den Figuren gezeigten Ausführungen ungefähr 10°. Erfindungsgemäß kann der Winkel α auch einen größeren oder kleineren Wert aufweisen, d.h. beispielsweise in einem Bereich von 5 bis 20° und gegebenenfalls auch in einem Bereich von 5 bis 30° liegen.

In Folge der schrägen Anordnung der Hydraulikanschlussbohrung 111 in der Bremszange kann der Winkel, in dem die Bremsleitung 120 von der Bremszange weggeführt wird, leicht durch Drehung des Anschlussglieds 130 um das Verbindungsglied 140 geändert werden. Der maximale Winkel, in dem die Bremsleitung deutlich nach Außen geführt wird, ergibt sich, wenn die Bremsleitung genau nach oben gedreht wird. Je weiter die Bremsleitung in die Waagerechte gedreht wird, desto geringer wird der Winkel, in dem die Bremsleitung seitlich nach Außen geführt wird. Wird die Bremsleitung parallel zum Boden geführt, wird die Bremsleitung gar nicht nach Außen geführt, sondern verläuft entlang der Achse des Zweirads. Durch die schräge Anordnung der Hydraulikanschlussbohrung ergibt sich auch ein einfacher und sicherer Aufbau des Anschussglieds, das gerade ausgebildet werden kann, weil der Winkel zur Wegführung der Bremsleitung 120 durch die schräge Anordnung der Hydraulikanschlussbohrung geschaffen wird.

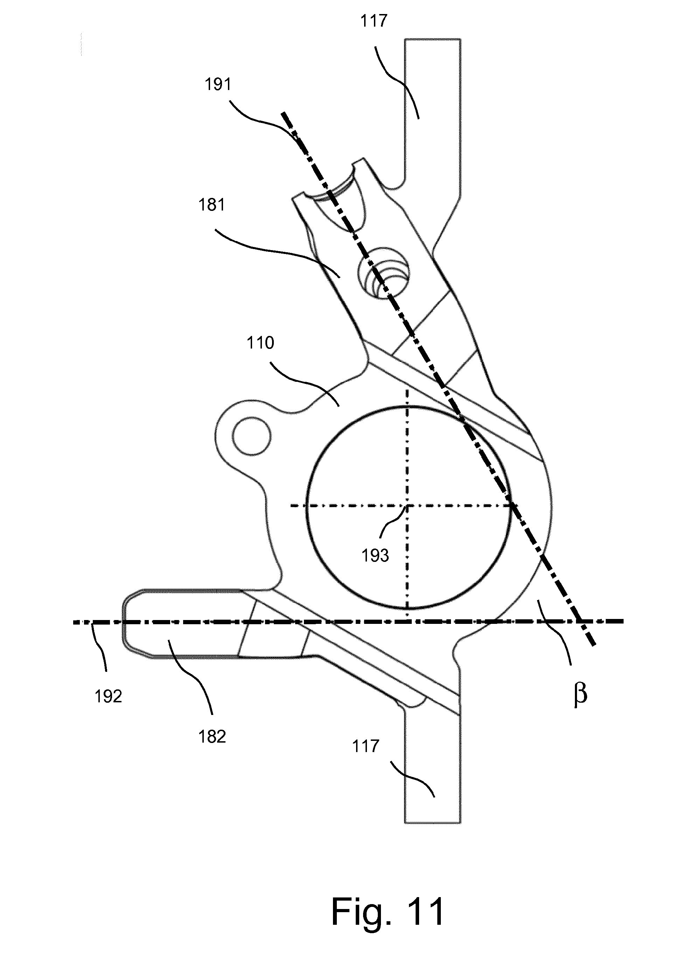

Figur 11 zeigt eine bevorzugte Geometrie einer erfindungsgemäßen Bremszange 110. Die Bremszange 110 weist zwei Seitenwände auf, in denen Bohrungen zur Aufnahme eines Kolbens ausgebildet sind. Die Mittellinie der Kolbenbohrungen ist mit dem Bezugszeichen 123 gekennzeichnet. Hilfslinien sind eingezeichnet, um den Mittelpunkt zu markieren. Die Bremszange 110 wird mit zwei Flanschen 117 an ein nicht dargestelltes feststehendes Rahmenteil eines Zweirad-Fahrzeuges befestigt. Die beiden Seitenwände der Bremszange sind über Bügel 181 und 182 mit einander verbunden. Zwischen den Bügeln 181 und 182 ist eine Bremsbelagaufnahme vorgesehen. Die Versteifungsbereiche bzw. Bügel 181 und 182 stehen in einem Winkel β zu einander, der bei der dargestellten Ausführung ungefähr 60° beträgt. Ein Winkel in diesem Bereich ist bevorzugt, jedoch sind andere Winkel denkbar. Die Größe des Winkels hängt auch von dem Abstand der Ebenen ab, in denen die Bügel 181, 182 liegen. Die Ebenen, in denen die Bügel liegen sind mit dem Bezugszeichen 191 bzw. 192 bezeichnet. Je geringer der Abstand der Ebenen 191, 192 von der Mittellinie 193 ist, desto größer sollte der Winkel β sein. Gemäß der bevorzugten Ausführung der Erfindung beträgt der Abstand der Ebenen 191 und 192 von der Mittellinie 193 ungefähr dem Radius der Zylinderbohrung.

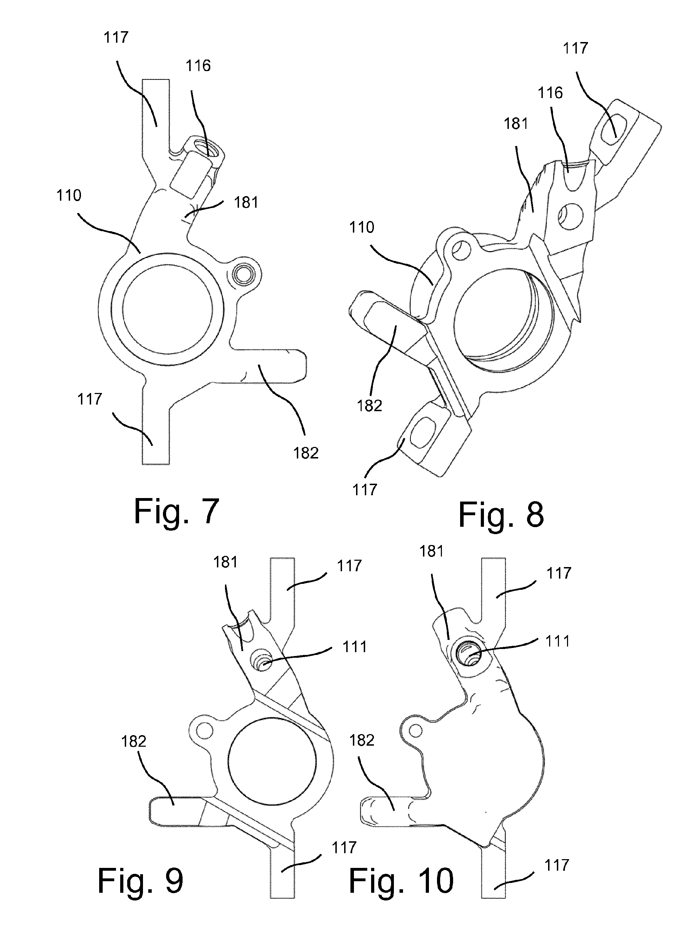

In dem Bügel 191 ist auch, wie in Figur 9 zu sehen, die Hydraulikanschlussbohrung 111 vorgesehen. Wenn die Hydraulikanschlussbohrung nicht in dem Bügel 181 vorgesehen ist, kann der Bügel 181 mit einer geringeren Stärke ausgeführt werden. Beispielsweise kann der Bügel 181 dann mit der gleichen Stärke wie der Bügel 182 ausgebildet sein. Bei dieser Ausführung ist es dann bevorzugt, dass der Bügel 181 ebenso wie der Bügel 182 einen größeren Abstand von der Mittellinie 193 aufweist, das heißt in anderen Worten, dass das Material an der inneren Seite des Bügels 181 weggenommen wird.

Gemäß der Erfindung weist der Bügel 181 eine größere Höhe auf als seine Stärke. Bei der dargestellten Ausführung beträgt die Höhe des Bügels 181 ungefähr das Doppelte von der Stärke des Bügels 181. Dieses Verhältnis ist bei dem Bügel 182 noch größer.

Wegen weiterer Details wird auf die Figuren 7 bis 10 sowie die Ausführungen zu dem Ausführungsbeispiel gemäß den Figuren 1 bis 5 bzw. 6 verwiesen.

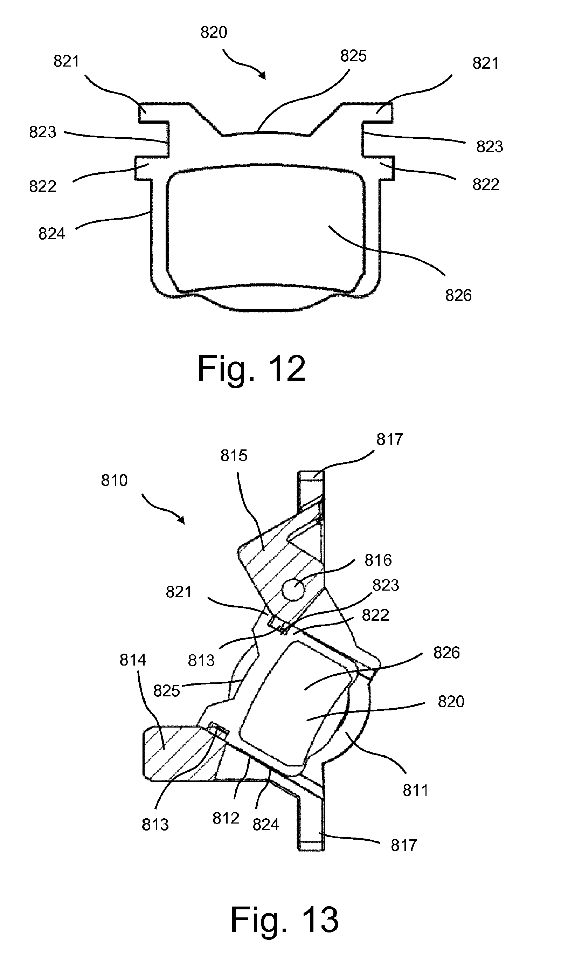

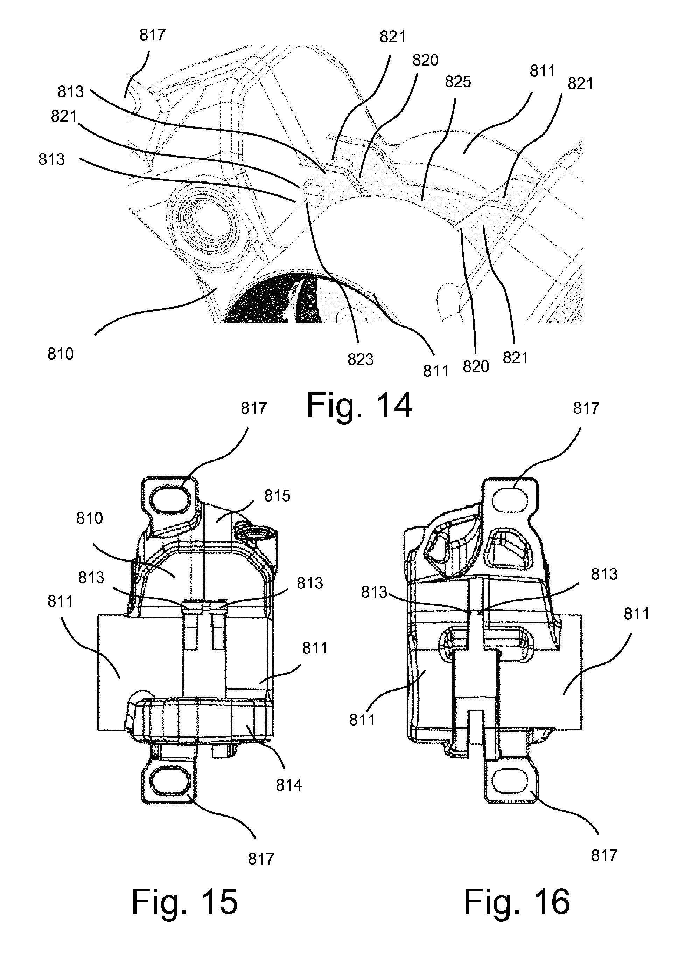

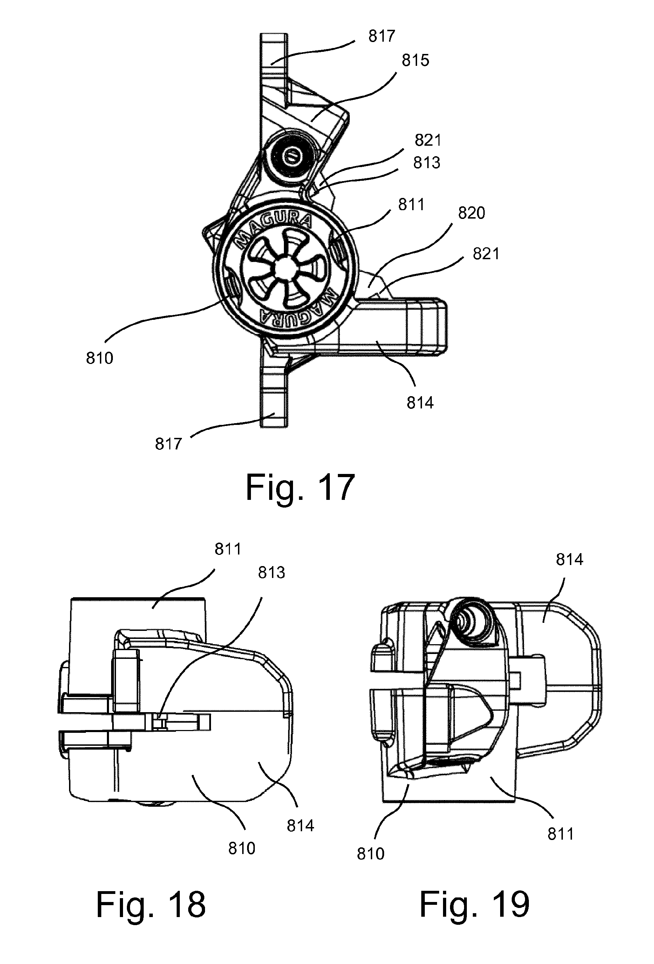

Die Figuren 12 bis 19 zeigen eine Bremszange 810 gemäß einer Ausführung mit einem Bremsbelag 820 gemäß einer Ausführung der Erfindung. Bei diesen Ausführungen der Erfindung liegt eine Besonderheit in der Halterung der Bremsbeläge 820 an der Bremszange 810.

Die Bremsbeläge 820 weisen an Ihrer Oberseite Fortsätze 821, 822 auf, die paarweise jeweils zur Seite vorstehen. Zwischen den beiden Fortsätzen 821, 822 eines jeden Paares ist eine Aussparung 823 vorgesehen, in die eine Schiene zur Halterung des Bremsbelags 820 eingreifen kann. Da auf beiden Seiten des Bremsbelags 820 eine derartige Aussparung 823 vorgesehen ist, kann eine sichere Halterung des Bremsbelags durch eine beidseitige Aufnahme erreicht werden.

Der Bremsbelag 820 weist ferner einen Reibbelag 826 auf, der auf dem Fachmann bekannte Weise befestigt und aufgebaut ist. An den Seiten weist der Bremsbelag 820 jeweils Anlageflächen 824 auf, mit denen sich der Bremsbelag 820 beim Bremsen an der Bremszange 810 abstützen kann.

Zwischen den beiden oberen Fortsätzen 821 weist der Bremsbelag 820 an seiner Oberseite eine Aussparung 825 auf. Diese Aussparung 825 dient der Gewichtsreduzierung und kann bei anderen Ausführungen der Erfindung nicht vorgesehen werden, ohne den Schutzbereich zu verlassen.

Die Bremszange 810 weist ein Paar Bremszylinder 811 auf, die einen Schacht einschließen, in dem die Bremsbeläge 820 aufgenommen werden. An seinen Seiten weist der Schacht Bremsbelaganlageflächen 812 auf, an denen sich die Bremsbeläge 820 beim Bremsen abstützen.

Die Bremszange 810 weist einen Scheibenraum zur Aufnahme einer nicht dargestellten Bremsscheibe auf. Zur Erhöhung der Steifigkeit sind an beiden Seiten Versteifungsglieder 814 bzw. 815 vorgesehen. Wegen deren Funktion wird auf die Beschreibung der anderen Figuren und Ausführungsbeispiele der vorliegenden Anmeldung verwiesen.

Die Figuren zeigen auch den Hydraulikkanal 816 und die Anschlussabschnitte 817 zur Befestigung der Bremszange 810 an einem Rahmenteil bzw. einer Gabel eines Fahrrads

Oberhalb des Schachtes bzw. oberhalb der Bremsbelaganlageflächen 812 ist eine Bremsbelagaufnahme 813 vorgesehen. Die Bremsbelagaufnahme 813 ist eine unterbrochene Schiene, die auf beiden Seiten des Schachtes oberhalb der Bremsbelaganlageflächen 812 vorgesehen sind. Die Bremsbelagaufnahme 813 ist in der Mitte, d.h. in der Ebene, in der sich bei montierter Bremse die Bremsscheibe befindet, unterbrochen, d.h. dass sich die Bremsbelagaufnahme 813 zu beiden Seiten dieser Ebene erstreckt.

Diese Ausbildung hat den Vorteil, dass der Bremsbelag 820 auf einfache Weise in der Bremszange 810 montiert bzw. gewechselt werden kann.

Zur Montage wird der Bremsbelag 820 von unten in den Schacht der Bremszange 810 gesteckt, d.h. aus einer Richtung, in der die Bremsscheibe bei einer montierten Bremszange 810 wäre. Die Bremsscheibe muss bekanntermaßen bei der Monatage von Bremsbelägen in Bremszangen entfernt sein. Da die Bremsbelagaufnahme 813 in der Ebene der Bremsscheibe ausgespart ist, kann der Bremsbelag 820 in der Ebene der Bremsscheibe vor die Bremsbelagaufnahme 813 angeordnet werden, und dann seitlich auf die Bremsbelagaufnahme geschoben werden. Sobald ein Bremsbelag zu einer Seite geschoben wurde, kann der andere Bremsbelag auf die entgegengesetzte Seite geschoben werden. Die beiden Bremsbeläge 820 können somit quasi wie ein Kleiderbügel auf eine Kleiderstange gehängt werden, ohne dass es erforderlich ist, wie im Stand der Technik, die Kleiderstange (d.h. den Bolzen, der den Bremsbelag sichert) zu entfernen. Sobald die Bremsscheibe wieder in dem Schacht und somit zwischen den Bremsbelägen angeordnet ist, sichert die Bremsscheibe die Bremsbeläge in der Bremszange gegen ein Herausfallen, weil die Bremsbeläge zur Demontage bzw. zum Wechseln in die Ebene der Bremsscheibe bewegt werden müssen. Diese Ebene ist jedoch durch die Bremsscheibe blockiert. Als zusätzliche Sicherung und zur Vermeidung von unerwünschten Klapper- bzw. Schleifgeräuschen kann zusätzlich eine Federeinrichtung 930 vorgesehen sein, die die Bremsbeläge in Richtung der Jeweiligen Bremskolben von der Bremsscheibe weg spannt.

Das Vorsehen der Bremsbelagaufnahme oberhalb des Schachtes bzw. oberhalb des Scheibenraumes der Bremszange 810 hat den weiteren Vorteil, dass die Bremszange besonders kostengünstig hergestellt werden kann, weil mehrere Bremszangen mit einem Werkzeug gleichzeitig gefertigt werden können. Das ist der Fall, weil beim Entformen die Formteile nicht in verschiedene Richtungen abgezogen werden müssen.

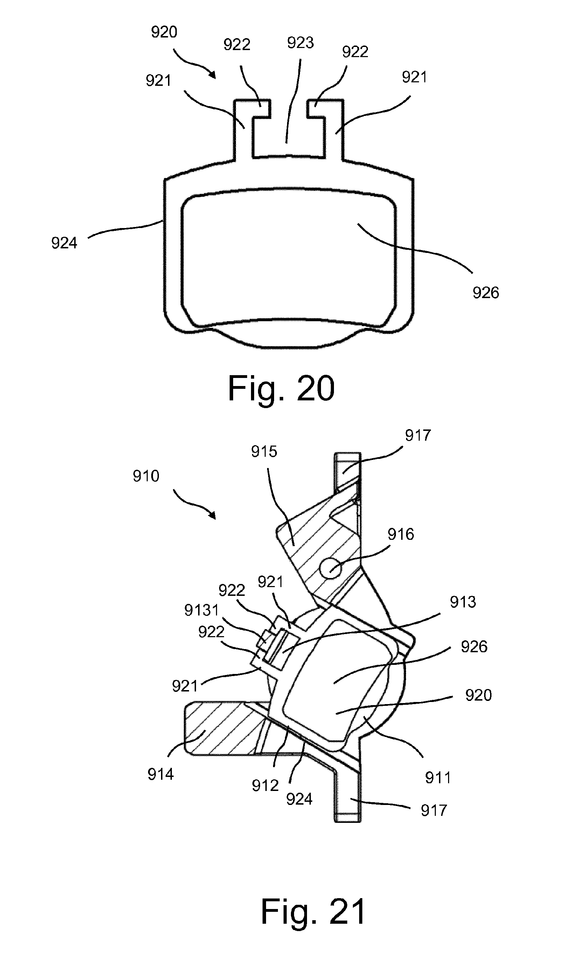

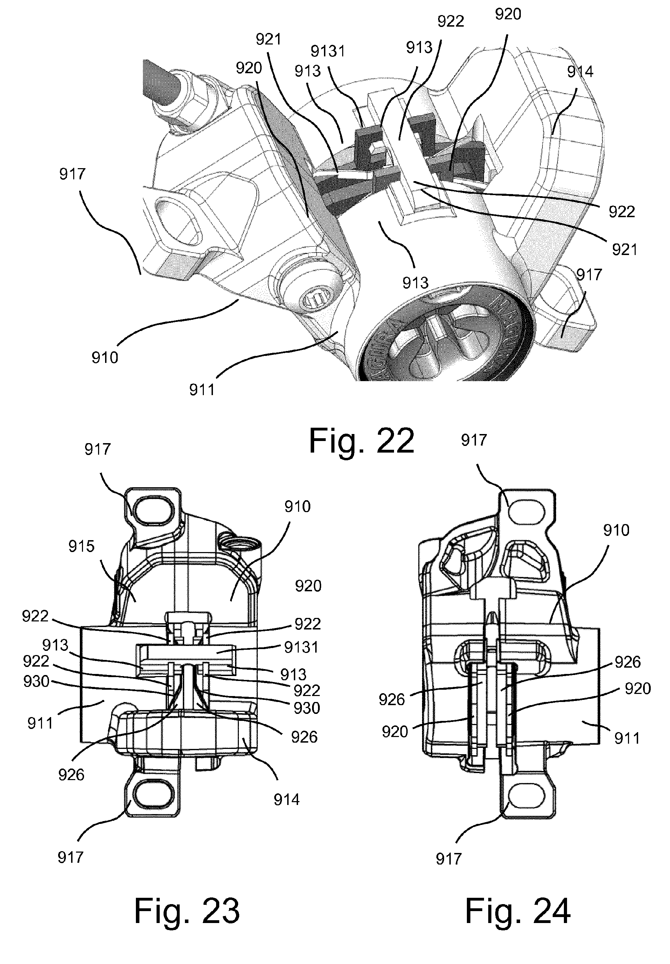

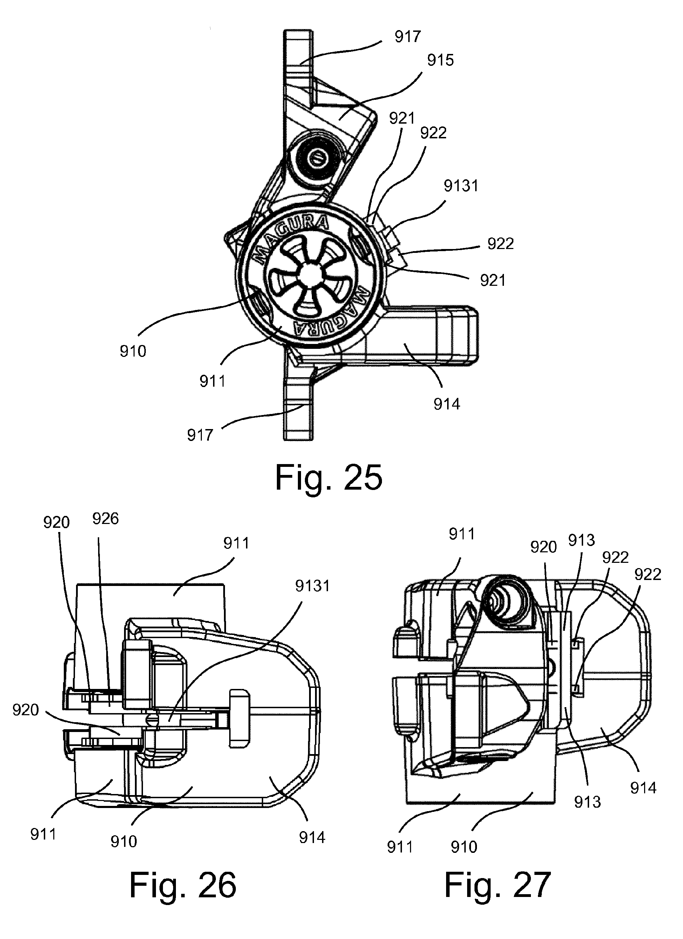

Die Figuren 20 bis 27 zeigen eine Bremszange 910 gemäß einer weiteren Ausführung mit einem Bremsbelag 920 gemäß einer weiteren Ausführung der Erfindung. Bei diesen Ausführungen der Erfindung liegt ebenfalls eine Besonderheit in der Halterung der Bremsbeläge 920 an der Bremszange 910.

Die beiden Ausführungen der Erfindung gemäß den Figuren 12 bis 19 bzw. 20 bis 27 sind ähnlich, Daher werden im Folgenden vor allem die Unterschiede der Ausführungen beschrieben und im Übrigen auf die Beschreibung der anderen Ausführung verweisen. Ähnliche bzw. sich entsprechende bzw. gleiche Teile sind mit den gleichen aber um 100 erhöhten Bezugszeichen bezeichnet.

Der Bremsbelag 920 weist an seiner Oberseite Fortsätze 921 auf, die sich paarweise nach oben erstrecken und jeweils weitere Fortsätze 921 aufweisen, die sich aufeinander zu erstrecken. Durch diese Fortsätze 921, 922 ist somit ein Hakenpaar gebildet, das eine Schiene umgreifen kann, die in der durch das Hakenpaar gebildeten Aussparung 923 angeordnet ist. Die Bremszange 910 weist oberhalb des Scheibenraums bzw. des Schachtes eine entsprechende Bremsbelagaufnahme 913 auf, die in der Mitte unterbrochen ist. Bei der gezeigten Ausführung sind die beiden Bremsbelagaufnahmen 913 mit einem Verbindungssteg 9131 miteinander verbunden, der sich quasi wie eine Brücke von der einen Bremsbelagaufnahme 913 zu der gegenüberliegenden Bremsbelagaufnahme 913 erstreckt.

Es ist klar, dass gemäß einer nicht dargestellten Ausführung der Erfindung der Verbindungssteg 9131 wegelassen werden kann. In diesem Fall könnten die beiden Fortsätze 922 miteinander verbunden sein, so dass die Bremsbelagaufnahmen durch den somit gebildeten Ring eingeschlossen werden. Ebenso wie bei den anderen Ausführungen der Erfindung sind die Bremsbelagaufnahmen vorzugsweise einstückig mit der Bremszange ausgebildet, vorzugsweise durch das Formwerkzeug. Wegen der geteilten Ausführung (d.h. in der Ebene der Bremsscheibe) und der Anordnung oberhalb des Scheibenraums ergeben sich die beschriebenen Vorteile der einfachen Montage bzw. des einfachen Wechsels der Bremsbeläge bei einem einfachen Aufbau der Bremszange.

## Patentansprüche

1. Hydraulische Scheibenbremse für ein lenkergeführtes Fahrzeug, insbesondere ein Fahrrad und/oder Motorrad, mit einer Bremszange (110), die einen Druckraum (114), eine Hydraulikanschlussbohrung (111) und zumindest einen Hydraulikkanal (112) aufweist, der von einem Verbindungsabschnitt (113) der Hydraulikanschlussbohrung (111) zu dem zumindest einen Druckraum (114) verläuft, einer Bremsleitung (120) und einem mit der Bremsleitung (120) verbundenen Anschlussglied (130), das einen ringförmigen Kopf (131) aufweist,
**dadurch gekennzeichnet, dass** die Hydraulikanschlussbohrung (111) in einer Richtung (152) verläuft, die einen Winkel (α) von ungefähr 5 bis 30 Grad relativ zu der Richtung (151) des zumindest einen Bremszangenzylinders (118) aufweist.

2. Hydraulische Scheibenbremse für ein lenkergeführtes Fahrzeug, insbesondere ein Fahrrad und/oder Motorrad, mit einer Bremszange (110), die einen Druckraum (114), eine Hydraulikanschlussbohrung (111) und zumindest einen Hydraulikkanal (112) aufweist, der von einem Verbindungsabschnitt (113) der Hydraulikanschlussbohrung (111) zu dem zumindest einen Druckraum (114) verläuft, einer Bremsleitung (120) und einem mit der Bremsleitung (120) verbundenen Anschlussglied (130), das einen ringförmigen Kopf (131) aufweist,
**dadurch gekennzeichnet, dass** sich das Anschlussglied (130) in einer Richtung (154) erstreckt, die einen Winkel (α) von ungefähr 5 bis 30 Grad relativ zu einer Richtung (153) aufweist, die senkrecht zu der Richtung (151) der Achse des zumindest einen Bremszangenzylinders (118) ist.

3. Hydraulische Scheibenbremse nach Anspruch 2, **dadurch gekennzeichnet, dass** die Hydraulikanschlussbohrung (111) in einer Richtung (152) verläuft, die einen Winkel (α) von ungefähr 5 bis 30 Grad relativ zu der Richtung (151) des zumindest einen Bremszangenzylinders (118) aufweist.

4. Hydraulische Scheibenbremse nach einem der vorhergehenden Ansprüche, bei der der Winkel (α) zwischen der Richtung der Hydraulikanschlussbohrung (111) und der Richtung (151) des zumindest einen Bremszangenzylinders (118) ungefähr 5 bis 20 Grad und vorzugsweise ungefähr 10 Grad beträgt.

5. Hydraulische Scheibenbremse nach einem der vorhergehenden Ansprüche, bei der der Winkel zwischen der Richtung (154), in der sich das Anschlussglied (130) erstreckt, und der Richtung (153), die senkrecht zu der Richtung (151) der Achse des zumindest einen Bremszangenzylinders (118) ist, ungefähr 5 bis 20 Grad und vorzugsweise ungefähr 10 Grad beträgt.

6. Hydraulische Scheibenbremse nach einem der vorhergehenden Ansprüche, die ein Verbindungsglied aufweist, das in der Hydraulikanschlussbohrung aufgenommen ist.

7. Hydraulische Scheibenbremse nach einem der vorhergehenden Ansprüche, bei der der ringförmige Kopf des Anschlussglieds das Verbindungsglied derart umschließt, dass das Anschlussglied um die Achse des Verbindungsglieds bzw. der Hydraulikanschlussbohrung drehbar gelagert ist.

8. Hydraulische Scheibenbremse nach einem der vorhergehenden Ansprüche, bei der das Anschlussglied gerade ausgebildet ist.

9. Hydraulische Scheibenbremse nach einem der vorhergehenden Ansprüche mit einem in der Hydraulikanschlussbohrung (111) angeordneten Verbindungsglied (140), wobei das Verbindungsglied (140) einen Verbindungsbereich (141) aufweist, der in dem Kopf (131) zur hydraulischen Verbindung der Bremsleitung (120) mit dem Verbindungsglied (140) angeordnet ist.

10. Hydraulische Scheibenbremse nach einem der Ansprüche 6 bis 9, **dadurch gekennzeichnet, dass** das Verbindungsglied (140) eine Außenverzahnung (142) und/oder an seinem Außenbereich zumindest eine Nut und/oder Abflachung aufweist, die den Verbindungsbereich (141) mit dem Verbindungsabschnitt (113) hydraulisch verbindet.

11. Hydraulische Scheibenbremse nach einem der Ansprüche 6 bis 10, bei der zwischen dem ringförmigen Kopf (131) des Anschlussglieds (130) und dem Verbindungsbereich (141) des Verbindungsglieds (140) Dichtungselemente (134, 135) vorgesehen sind, die in axialer Richtung des Verbindungsglieds (140) und gegebenenfalls in radialer Richtung des Verbindungsglieds (140) abdichten.

12. Hydraulische Scheibenbremse nach einem der vorhergehenden Ansprüche, bei der die Bremszange einen Scheibenraum und eine Bremsbelagaufnahme aufweist, die oberhalb des Scheibenraums angeordnet ist, wobei die Bremszange zwei Seitenabschnitte aufweist, die den Scheibenraum seitlich begrenzen, und einen Hydraulikanschlussbereich aufweist, der die beiden Seitenbereiche mit einander verbindet, wobei die Bremszange einen Verbindungsabschnitt zur Verbindung der beiden Seitenabschnitte aufweist, wobei die Bremsbelagaufnahme zwischen dem Hydraulikanschlussabschnitt und dem Verbindungsabschnitt angeordnet ist.

13. Hydraulische Scheibenbremse nach Anspruch 12, bei der der Verbindungsabschnitt bezogen auf den Zylinderraum außermittig angeordnet ist.

14. Hydraulische Scheibenbremse nach einem der Ansprüche 12 bis 13, bei der der Verbindungsabschnitt mit dem Hydraulikanschlussabschnitt einen Winkel von weniger als 120°, vorzugsweise von weniger als 100°, weiter vorzugsweise von weniger als 90°, weiter vorzugsweise von weniger als 80° und bevorzugt von ungefähr 70° einschließt, und/oder bei der der Hydraulikanschlussabschnitt und der Verbindungsabschnitt einen Winkel von mehr als 50°, vorzugsweise von mehr als 60° und bevorzugt von ungefähr 70° einschließen.

15. Hydraulische Scheibenbremse nach einem der Ansprüche 12 bis 14, bei der der Hydraulikanschlussabschnitt und/oder der Verbindungsabschnitt im Wesentlichen entlang einer Tangente des Zylinderraums und/oder im Wesentlichen entlang einer Tangente des Bremszangengehäuses im Bereich des Zylinderraums angeordnet sind.
